# EUROPEAN PATENT APPLICATION

(11) **EP 4 349 932 A1**
(43) Date of publication of application: **10.04.2024**
(21) Application number: 22816075.0
(22) Date of filing: 31.05.2022
(51) Int. Cl.: C09J 183/10, C09J 7/38, G06F 3/041

(54) **DISPLAY DEVICE (IN PARTICULAR, HAPTIC DISPLAY DEVICE) AND DESIGN METHOD FOR SAME**

(30) Priority: 31.05.2021 JP 2021090971
(71) Applicant: Dow Toray Co., Ltd., Tokyo 140-8617 (JP)
(72) Inventor: ITOH, Maki, Ichihara-shi, Chiba 299-0108 (JP); SUTO, Michitaka, Ichihara-shi, Chiba 299-0108 (JP); TSUDA, Takeaki, Ichihara-shi, Chiba 299-0108 (JP)
(74) Representative: Murgitroyd & Company
(86) International application number: PCT/JP2022/022033
(87) International publication number: WO 2022/255328

(57) **Abstract**

The present invention relates to a display device having, between members, a pressure-sensitive adhesive layer having a maximum value of loss tangent tanδ (f) of 0.9 or more at 25°C and a frequency f (Hz) of 100 to 300 Hz and a pressure-sensitive adhesive strength of 500 gf/inch or more as measured by a specific method. The display device of the present invention can improve the operability and reliability of a display device having a haptic function, and can provide sufficient close adhesion between members for practical use in the display device and sufficiently improve the reliability and durability thereof.

## Description

### [TECHNICAL FIELD]

The present invention relates to a display device having a pressure-sensitive adhesive layer combining specific viscoelastic properties and adhesive strength between members, and particularly relates to a haptic display device having a haptic function from tactile detection to haptic feedback/notification, and a design method for a display device using a pressure-sensitive adhesive layer with such properties.

### [BACKGROUND ART]

Silicone-based pressure-sensitive adhesive compositions are superior to acrylic and rubber pressure-sensitive adhesive compositions in electrical insulation, heat resistance, cold resistance, pressure-sensitive adhesion to various adherends, and transparency if necessary: therefore, the addition reaction curing type pressure-sensitive adhesive compositions in particular are widely used. Particularly in recent years, the demand for silicone-based optically transparent pressure-sensitive adhesives (Optically Clear Adhesive, hereinafter referred to as "OCA") has expanded in material development. Silicone-based OCAs have sufficient pressure-sensitive adhesive strength for practical use, are flexible and deformable, have excellent heat, cold, and light resistance, do not cause coloring or discoloration problems in an OCA layer, and have little change in physical properties such as pressure-sensitive adhesive strength, storage elastic modulus (e.g., shear storage elastic modulus G'), hardness, and the like of the OCA layer. Therefore, applications are expected to be developed for laminating or sealing display devices that are subject to folding or constant deformation, such as curved surface displays and flexible displays used in a wide range of temperatures, including low temperatures such as -20°C and the like (for example, Patent Documents 1 and 2.) Furthermore, the applicants in the present case have proposed a plurality of silicone-based pressure-sensitive adhesive compositions with different pressure-sensitive adhesive strengths of flexible structures, pressure-sensitive adhesive layers obtained by curing, and storage elastic modulus at low temperature to room temperature, according to the applications such as display devices and the like (Patent Documents 3 to 7).

On the other hand, in recent years, haptic functions to provide the user with a sense of touch, not just a touch screen that is operated by simply touching the screen, have been developed using haptic and dynamic feedback technologies that utilize the detection of user contact by providing the user with a haptic feedback effect (i.e., haptic effect) such as force, vibration and motion. In particular, in the field of touch panel operation and display devices such as smart devices and the like, such haptic functions are implemented in display devices together with touch screens, which are input devices, to provide haptic feedback to the user by vibrations or the like when the user touches the touch screen. Furthermore, when the display device is contact (touch) operated, there is a response or notification to tactile sensations such as touch/vibration, and thus apparatus operation is possible without simply relying on vision (= eyes). Therefore, market applications for haptic devices having such haptic functions, and particularly haptic display devices, are rapidly expanding.

Such haptic display devices have been proposed to be configured with silicone materials and non-silicone materials such as acrylics and the like as electroactive polymer members thereof (e.g., Patent Documents 8 and 9). However, they did not fully meet the requirements of a highly functional material that can improve the operability and reliability of display devices with haptic functions, while conforming to the requirements for adhering or sealing members configuring display devices such as electrodes, displays, and the like. In addition, an acrylic pressure-sensitive adhesive layer has inadequate heat and cold resistance and light resistance, and the storage elastic modulus of the pressure-sensitive adhesive layer is insufficient, particularly at low temperatures, which may cause failure or reduced reliability due to interlayer peeling and the like when a display is deformed.

Therefore, it is difficult to efficiently design a display device with a favorable haptic function and sufficient close adhesion and durability for practical use, and to provide a display device with a suitable pressure-sensitive adhesive layer (particularly a pressure-sensitive adhesive layer obtained by curing silicone OCA).

On the other hand, some interesting research results have been obtained on the haptic feel of haptic devices as human interfaces. For example, Non-Patent Document 1, Non-Patent Document 2, and Non-Patent Document 3 describe the frequency region that the human body can sensitively detect. Soda et al. found that the frequency range of 200 to 300 Hz is the most sensitive based on the vibration perception of sensory receptors distributed on the skin (Non-Patent Document 1). Tanaka reported that the frequency at which the fingertip senses surface roughness with a haptic presentation device is sensitive near 50 Hz and 200 Hz (Non-Patent Document 2). Tanaka reported that the human sense of touch is most sensitive to vibrations near 250 Hz, which may be supported by the skin of the fingertip easily transmitting vibrations around 100 to 300 Hz (Non-Patent Document 3). Taninaka et al. also introduced that haptic technology using ultrasound can represent the boundaries of buttons and the like displayed on the screen, as well as minute irregularities and the like (Non-Patent Document 4).

However, these documents do not specifically disclose material design for transmitting vibration in the frequency region, in particular, a pressure-sensitive adhesive strength and specific viscoelastic properties suitable for adhesion between members, and particularly the combination of specific physical parameters in display devices regarding silicone-based OCA materials. There is also no description or suggestion of the significance of selecting specific physical parameters, combinations thereof, and the like.

### [PRIOR ART DOCUMENTS]

### [PATENT DOCUMENTS]

[Patent Document 1] Japanese PCT Application 2019-528330
[Patent Document 2] Japanese PCT Application 2019-527745
[Patent Document 3] International Patent Publication WO 2017/188308
[Patent Document 4] International Patent Publication WO 2020/032285
[Patent Document 5] International Patent Publication WO 2020/032286
[Patent Document 6] International Patent Publication WO 2020/032287
[Patent Document 7] International Patent Application PCT/JP2020/30623
[Patent Document 8] Japanese Unexamined Patent Application 2015-115078 (Japanese Patent No. 5897101)
[Patent Document 9] Japanese Unexamined Patent Application 2014-174988 (Japanese Patent No. 6328954)

### [NON-PATENT DOCUMENTS]

[Non-Patent Document 1] SODA Megumi, et al., Sci. Eng. Review Doshisha Univ., 2013, 54 (2) 28.
[Non-Patent Document 2] TANAKA Mami, Journal of the Japan Society for Precision Engineering, 2016, 82 (1), 20.
[Non-Patent Document 3] TANAKA Yoshihiro, Journal of the Society of Biomechanisms, 2017, 41 (1), 21.
[Non-Patent Document 4] TANINAKA Kiyoshi, FUJITSU, 2017, 68 (1), 86.

### [SUMMARY OF THE INVENTION]

### [PROBLEM TO BE SOLVED BY THE INVENTION]

In order to solve the aforementioned problems, an object of the present invention is to provide: a display device having between members a pressure-sensitive adhesive layer, which can improve the operability and reliability of a display device having a haptic function, provide sufficient close adhesion between members for practical use in the display device, and sufficiently improve the reliability and durability thereof; and a design method for the same.

### [MEANS FOR SOLVING THE PROBLEM]

As a result of conducting diligent research on the problem described above, the present inventors arrived at the present invention. In other words, the problem of the present invention can be suitably solved by a display device having a pressure-sensitive adhesive layer between members, where the pressure-sensitive adhesive has a maximum value of the loss tangent tanδ (f) at 25°C and frequency f (Hz) of 100 to 300 Hz that is 0.9 or more (feature i)), and when the thickness thereof is 50 µm, has a pressure-sensitive adhesive strength that is 500 gf/inch or more as measured at a tensile rate of 300 mm/min using a 180° peel test method in accordance with JIS Z 0237 with respect to a 2 mm thick polymethyl methacrylate sheet (feature ii)). Furthermore, the problem of the present invention is particularly suitably solved when the pressure-sensitive adhesive layer is a cured product of a specific silicone-based OCA with excellent transparency, heat resistance, and the like, and the display device is a haptic display device. Similarly, the problem of the present invention is suitably solved by a design method for a display device, including a step of arranging a pressure-sensitive adhesive layer having the following features i) and ii) between members forming a display device to achieve or improve a haptic function of the device.

### [EFFECT OF THE INVENTION]

The display device of the present invention has a pressure-sensitive adhesive layer that has both prescribed viscoelastic properties (feature i) above) and pressure-sensitive adhesive strength that provides sufficient close adhesion between members for practical use (feature ii) above). Therefore, it is possible to provide: a display device having the structure, which can improve the operability and reliability of a display device with a haptic function, and which has the pressure-sensitive adhesive layer between members and excellent reliability and durability; and a design method thereof. In other words, the selective application of pressure-sensitive adhesive layers that combine the features above, particularly in haptic display devices, achieves favorable touch operability and haptic functionality, thereby improving a user's sense of use and satisfaction with a product, as well as the reliability and durability of the display device itself.

In particular, the silicone-based pressure-sensitive adhesive layer has excellent heat resistance, cold resistance, and light resistance, and the pressure-sensitive adhesive layer is not prone to coloring or discoloration problems. Therefore, in addition to the improvement of the haptic function described above, there is the advantage of being able to design and manufacture a display device having a pressure-sensitive adhesive layer with excellent transparency and close adhesion between members over a long period of time in an industrially efficient and highly reliable manner.

### [MODE FOR CARRYING OUT THE INVENTION]

### [DISPLAY DEVICE AND CONFIGURATION THEREOF]

The display device according to the present invention preferably has a haptic function. Herein, "haptic function" is a function that provides the user with a sense of touch by means of haptic feedback effects or notifications such as force, vibration, and motion. In the present specification, a device having a haptic function is sometimes referred to as a "haptic device" and a display device having a haptic function is sometimes simply called a "haptic display device".

Such display devices are typical of mobile devices, touch screen devices, personal computers or smartphones, and are preferably display devices with a touch panel, such as smartphones, tablet touch screen devices, automotive consoles, and the like. In particular, a haptic display device having a haptic function that recognizes contact with the display surface and haptic feedback or notification for the contact is a particularly preferred form of display device due to the technical effects of the present invention.

Such a display device may have a flat display surface, or may be a flexible or curved display, including digital displays designed for repeated deformation actions (including bending, folding, opening/closing, winding, rolling or scrolling as with a scroll) or sustained stress, such as curved surfaces, and is not particularly limited.

The display device according to the present invention has the pressure-sensitive adhesive layer having the features described later between members, and the type of members and the number and arrangement of the pressure-sensitive adhesive layers within the display device are not particularly limited. On the other hand, a preferred haptic display device in the present invention may have a structure obtained by laminating a display panel, a haptic-integrated touch screen, and a protective cover made of a transparent member such as glass or the like. The haptic-integrated touch screen generally has a structure provided with an electrode layer on at least one surface or both surfaces of a film-like or sheet-like member. The pressure-sensitive adhesive layer according to the present invention is preferably arranged as an adhesive layer or intermediate layer between these members, and by the nature thereof, may be a structure having an electrode layer on one surface or both surfaces as an adhesive layer (adhesive film) configuring a haptic-integrated touch screen, or may be arranged as an adhesive layer or an intermediate layer between a haptic-integrated touch screen and a protective cover, which may be configured from another transparent insulating film or the like.

### [Feature i) of pressure-sensitive adhesive layer: Numerical range of loss tangent tanδ (f)]

The pressure-sensitive adhesive layer used in the display device according to the present invention is characterized in that the maximum value of the loss tangent tanδ (f) of the pressure-sensitive adhesive layer in the frequency range of 100 to 300 Hz of frequency f (Hz) is 0.9 or more in the frequency dispersion curve obtained by dynamic viscoelasticity measurement thereof at 25°C (including the master curve obtained according to the time-temperature conversion law described later). Furthermore, the maximum value of tanδ(f) may be 0.95 or more, 1.0 or more, 1.1 or more, or 1.2 or more in the same frequency range, and the maximum value may be in a range of 0.9 to 2.1, 0.95 to 2.05, or 1.0 to 2.0. Note that the pressure-sensitive adhesive layer used in the display device according to the present invention may have a tanδ (f) value of less than 0.90 at some frequencies (f) so long as it has the maximum value described above within the frequency range above, but from the perspective of haptic display device performance, the value of tan δ (f) is preferably 0.70 or less at a frequency f (Hz) of 100 to 300 Hz. Note that in the present specification, unless otherwise stated, the loss tangent tanδ (f) of the pressure-sensitive adhesive layer at a certain frequency f (Hz) is a value at 25°C.

Herein, "the maximum value of the loss tangent tanδ (f) of the pressure-sensitive adhesive layer in the frequency range of 100 to 300 Hz of frequency f (Hz) is 0.9 or more" means that the value of the loss tangent tanδ (f) of the pressure-sensitive adhesive layer is 0.9 or higher in some or all of the frequency region within the range of 100 to 300 Hz. Thus, the maximum value within the same frequency range may be 0.9 or more, a continuous value of 0.9 or more may be present in all or part of the frequency region within the same frequency range, or the loss tangent tanδ(f) for at least one or more frequency points (f) at different frequencies within the range of 100 to 300 Hz may be 0.9 or more. As an example, based on the actual measurement by the frequency dispersion measurement method described above or the master curve showing the dependence of tanδ (f) on frequency (f) as described later, any one of the values of the loss tangent tanδ (f) at a frequency (f) of 100, 200, or 300 Hz of the pressure-sensitive adhesive layer according to the present invention may be 0.9 or higher, but is not limited thereto.

On the other hand, if the loss tangent tanδ (f) of the pressure-sensitive adhesive according to the definition above is less than 0.9 throughout the same frequency region, in other words, the maximum value of the loss tangent tanδ (f) is less than 0.9, the user's tactile sensation to a haptic response, signal, or feedback generated or transmitted through the pressure-sensitive adhesive layer may not be sensitively detected or perceived, and the haptic function as the user's tactile sensation may not be sufficiently improved.

### [Significance and derivation of loss tangent (tanδ) value of pressure-sensitive adhesive layer at certain frequency]

The value of the loss tangent tan δ (f) of the pressure-sensitive adhesive layer at a certain frequency (f) Hz is obtained by actually measuring tan δ (f) in a certain frequency range based on the frequency dispersion measurement method while keeping the temperature constant (25°C in this case) to obtain a frequency dispersion curve, or can be specified or derived by creating a master curve that shows the dependence of tanδ (f) on frequency (f) according to the time-temperature conversion law, which is a well-known technique, based on data measured over a narrower frequency region and at different temperatures. With the present invention, the improvement of haptic function as a sense of touch of the user, and particularly the suitability and effectiveness for user's sense of use and perception can be easily determined in advance from the behavior related to the loss tangent tanδ (f) in the range of frequency f (Hz) of 100 to 300 Hz of the pressure-sensitive adhesive layer used in a display device at 25°C, and can be used for material selection and design in a haptic display device.

Herein, the loss tangent (tanδ) value of a material is the ratio of the storage (shear) elastic modulus (G') and loss (shear) elastic modulus (G") of the material, expressed as G"/G'. Furthermore, the loss tangent tanδ (f) of the pressure-sensitive adhesive layer at a certain frequency f(1/t) in the present invention may be derived from the following known calculation process for the storage elastic modulus G' (f) and loss elastic modulus G" (f) with respect to frequency f(1/t), using a master curve (curve) created based on the dynamic viscoelasticity measurement results of the pressure-sensitive adhesive and the time-temperature conversion law.

### <Creation of master curve>

In general, dynamic viscoelasticity measurements apply a sinusoidal wave of strain with frequency ω to a test piece and measure the corresponding stress. In the case of viscous bodies, the given strain energy is dissipated as heat and is converted to velocity, resulting in a phase difference of 90°. In the case of elastic bodies, stress and strain are proportional, so there is no phase difference. In viscoelastic bodies, the elastic modulus, which is defined as the ratio of stress to strain, is a complex number as a function of frequency ω. The real part is an elastic component and storage elastic modulus, and the imaginary part is a viscous component and the loss elastic modulus.

In general, polymeric materials, which are viscoelastic bodies, behave stiffer at higher frequencies at the same temperature, and stiffer at lower temperatures at the same frequencies. Furthermore, this is known as the time-temperature conversion law, which states that if a measurement value at a certain temperature is converted into a frequency according to that temperature, it will match the measurement result at another temperature. This makes it possible to measure the frequency dispersion over a certain range at a certain isothermal temperature, and by changing the temperature in several stages, data over a wide frequency range, which is difficult to measure with a single device, can be obtained. A curve that combines a narrow range of measurement results into a wide range of results using the time-temperature conversion law is called a master curve.

The master curve in the present invention is obtained by measuring the frequency dependence of the storage elastic modulus G', loss elastic modulus G", and loss tangent (tanδ) at several temperatures, under isothermal conditions, in shear mode at 0.1% strain at 0.1 to 10 Hz, while lowering the temperature stepwise, and applying the time-temperature conversion law, and is ultimately obtained as a master curve showing the dependence of the values of storage elastic modulus G' (f), loss elastic modulus G" (f) and loss tangent tanδ (f) with respect to frequency (f) at 25°C.

If the master curve of the loss tangent tanδ (f) to the frequency f(1/t) above for a certain pressure-sensitive adhesive layer, and the value of tanδ (f) at a frequency f (Hz) of 100 to 300 Hz satisfy the conditions of feature i) of the present invention, particularly preferred conditions thereof, notification or feedback related to the user's tactile sensation can be generated or transmitted through the pressure-sensitive adhesive layer in a form that is excellent for detection sensitivity, thereby improving the haptic function of the display device.

Note that although the method for measuring dynamic viscoelasticity and creating a master curve for the loss tangent tanδ (f) is as described above, this does not preclude the application of the pressure-sensitive adhesive layer with other dynamic viscoelastic properties to the display device of the present invention so long as the pressure-sensitive adhesive layer obtained by the method satisfies the conditions of feature i). This includes, for example, the selection and application of a pressure-sensitive adhesive layer further having suitable parameters as creep compliance values based on measurement results of the dynamic viscoelasticity of the pressure-sensitive adhesive layer.

### [Feature ii) of pressure-sensitive adhesive layer: pressure-sensitive adhesive strength]

In addition to the aforementioned feature i), the pressure-sensitive adhesive layer used in the display device according to the present invention has sufficient pressure-sensitive adhesive strength for practical use. For example, of non-adhesive gel materials and dielectric polymer materials, there are materials whose loss tangent tanδ (f) satisfies the feature i) above. If the pressure-sensitive adhesive strength is insufficient, adhesion between members configuring the display device may become insufficient, making it impossible to achieve the object of the present invention, which is to improve the reliability and durability of the display device itself. In particular, when a member having haptic function and a user interface cannot be sufficiently close contact, interlayer peeling between members and the like may result in the reduction of a haptic response to user touch, a tactile sensation for the user to the signal or feedback, and sense of use and responsiveness, and thus the haptic function may not be sufficiently improved.

Specifically, the pressure-sensitive adhesive layer according to the present invention can be designed such that pressure-sensitive adhesive strength of the pressure-sensitive adhesive layer having a thickness of 50 µm, as measured at a tensile rate of 300 mm/min using a 180° peel test method in accordance with JIS Z 0237 for a polymethyl methacrylate sheet having a thickness of 2 mm, is 500 gf/inch or more, preferably 1000 gf/inch or more, more preferably 1200 gf/inch or more, and particularly preferably within a range of 1000 to 4000 gf/inch. A pressure-sensitive adhesive layer having pressure-sensitive adhesive strength within a range of 1200 to 3500 gf/inch is preferable. Note that the thickness (50 µm) described above is the thickness of a cured layer itself serving as a reference for objectively defining the pressure-sensitive adhesive strength of the pressure-sensitive adhesive layer according to the present invention. The pressure-sensitive adhesive layer in a display device of the present invention is not limited to a thickness of 50 µm and may be a cured layer or a pressure-sensitive adhesive layer of an arbitrary thickness. If the pressure-sensitive adhesive strength of the pressure-sensitive adhesive layer according to the present invention is within the range above, it is possible to adhere members configuring a display device, and particularly a member having a haptic function and a member serving as a user interface such as a protective cover and the like, without causing gaps or peeling, thereby improving the reliability and durability of the entire display device.

Note that when the pressure-sensitive adhesive layer according to the present invention has the aforementioned pressure-sensitive adhesive strength and the viscoelastic properties as in feature i), in addition to improving the haptic function, the pressure-sensitive adhesive layer has resilience and flexibility against deformation, stress and curvature between members configuring the display device, thus achieving a high degree of close contact and adhesive strength, as well as a high degree of conformability to the members.

### [Optional feature iii) of pressure-sensitive adhesive layer: Properties related to transparency, color tone, or coloration and discoloration]

The pressure-sensitive adhesive layer used in a display device according to the present invention, and particularly a silicone-based pressure-sensitive adhesive layer may be substantially transparent, translucent, or opaque, such that the transparency thereof can be designed in accordance with the application of the pressure-sensitive adhesive layer. When it is visually transparent, or more objectively, when the light transmittance of air is 100%, the transmittance of light at a wavelength of 450 nm of the pressure-sensitive adhesive layer for a display device formed from a cured layer having a thickness of 100 µm is 80% or higher, and preferably 90% or higher, and may be designed so as to be 95% or higher. Furthermore, a filler component or additive may be used to the extent that transparency and light transmittance are not impaired. However, with respect to the adhesion and the like of electrical or electronic parts which do not require light transmittance in the display device, a semi-transparent to opaque pressure-sensitive adhesive layer may be used, and a filler component or additive that impairs colorability or light transmittance may be used depending on the required properties other than light transmittance.

In particular, if the pressure-sensitive adhesive layer configuring a haptic display device is a member having a haptic function or a member that transmits a haptic response, signal or feedback to a user, the pressure-sensitive adhesive layer is particularly preferably substantially transparent. This is because, in addition to the viscoelastic properties of feature i) described earlier, the structure of the haptic display device members firmly adhered together by the pressure-sensitive adhesive layer with excellent transparency improves the haptic function for a user along with visibility, and improves the sense of use, responsiveness, reliability, and the like of the display device as a whole.

Note that if a silicone-based pressure-sensitive adhesive layer is used, a cured product can be designed so as to not be colored, in addition to the aforementioned transparency, by reducing the amount of the platinum-based metal described later. Furthermore, even when the cured layer of the present invention is exposed to high temperatures or high-energy beams such as UV rays or the like for an extended period of time, design can be such that the color tone thereof does not change significantly and the problem of yellowing, in particular, does not occur.

### [Material of pressure-sensitive adhesive layer]

In the display device according to the present invention, the pressure-sensitive adhesive layer arranged as an adhesive layer or an intermediate layer between members thereof may have the above features i) and ii) and optionally have feature iii) and other properties, and the type thereof is not particularly limited. For example, at least one type selected from the group consisting of silicone-based pressure-sensitive adhesives, acrylic pressure-sensitive adhesives, and urethane-based pressure-sensitive adhesives can be used. While acrylic pressure-sensitive adhesives may be selected in terms of economy, adhesion to other substrates, and durability, silicone-based pressure-sensitive adhesives are advantageous, particularly in terms of long-term, heat, cold, light, and transparency resistance, and the use of silicone-based OCA is highly preferred.

### [Pressure-sensitive adhesive layer-forming organopolysiloxane composition]

The display device in the present invention preferably has a pressure-sensitive adhesive layer between members that have the properties described above. In particular, as such pressure-sensitive adhesive layer, the use of a silicone-based pressure-sensitive adhesive layer obtained by curing a pressure-sensitive adhesive layer-forming organopolysiloxane composition described below is preferred.

The composition quickly cures by a curing reaction including a hydrosilylation reaction to form a pressure-sensitive adhesive layer having strong adhesive strength with regard to a substrate. Each component thereof, the range of organopolysiloxane resin or mixture thereof, which is a technical feature, the mass ratio of organopolysiloxane resin relative to its chain organopolysiloxane, and the properties of the pressure-sensitive adhesive layer are described below.

As described above, the preferred pressure-sensitive adhesive layer-forming organopolysiloxane composition of the present invention cures via a hydrosilylation reaction so as to form a pressure-sensitive adhesive layer having a certain pressure-sensitive adhesive strength. In the composition, the sum of the amount of hydroxyl groups and hydrolyzable groups with regard to all silicon atoms in a molecule is 9 mol% or less, an organopolysiloxane resin alone or in the form of a mixture having different molecular weight ranges is used, and the range of formulation of the organopolysiloxane resin with regard to the chain organopolysiloxane having an alkenyl group serving as a main agent is within a specific range. The pressure-sensitive adhesive layer obtained by curing the composition having this feature has a shear storage elastic modulus G' at 25°C of 1.0 MPa or less, in addition to suitably further having a certain pressure-sensitive adhesive strength.

More specifically, the preferred pressure-sensitive adhesive layer-forming organopolysiloxane composition in the present invention contains:
(A) a chain organopolysiloxane having alkenyl groups in numbers greater than 1 on average in a molecule;
(B) an organopolysiloxane resin in which the sum of the amount of hydroxyl groups and hydrolyzable groups relative to all silicon atoms in a molecule is 9 mol% or less;
(C) an organohydrogenpolysiloxane having at least two Si-H bonds in a molecule;
(D) an effective amount of a hydrosilylation reaction catalyst; and optionally, (A') a chain organopolysiloxane not containing a carbon-carbon double bond-containing reactive group in a molecule.
Hereinafter, each component will be described.

The alkenyl group-containing organopolysiloxane of component (A) is a chain polysiloxane molecule, is the main agent (base polymer) of this composition, and contains an alkenyl group bonded to a number of silicon atoms greater than 1 on average in one molecule, with a preferable number of alkenyl groups being 1.5 or more in one molecule. Examples of the alkenyl groups of the organopolysiloxane of component (A) include alkenyl groups having 2 to 10 carbon atoms, and vinyl groups or hexenyl groups are particularly preferable. Examples of the bonding position of the alkenyl groups of component (A) include the molecular chain ends and/or the molecular side chains. Note that component (A) may contain a single component or may be a mixture of two or more different components.

In the organopolysiloxane of component (A), examples of organic groups bonded to a silicon atom other than an alkenyl group include methyl groups and other alkyl groups; phenyl groups and other aryl groups; aralkyl groups; alkyl halide groups; and the like. Methyl groups and phenyl groups are particularly preferred.

Component (A) is different from component (B) and has a chain polysiloxane molecular structure. For example, component (A) is preferably a straight chain or partially branched straight chain and may partially include a cyclic three-dimensional network. Preferably, the main chain contains repeating diorganosiloxane units and is preferably a straight-chain or branched-chain diorganopolysiloxane blocked at both molecular chain ends with triorganosiloxy groups. Note that the siloxane units which provide a branched-chain organopolysiloxane are T units or Q units described below.

The properties of component (A) at room temperature may be those of an oily or raw rubber-like substance, with the viscosity of component (A) being 50 mPa·s or more, and particularly preferably 100 mPa·s or more at 25°C. In particular, when the organopolysiloxane composition according to the present invention is a solvent type, at least a portion of component (A) is (A1) a raw rubber-like alkenyl group-containing organopolysiloxane having a viscosity of 100,000 mPa·s or less at 25°C or having a plasticity (thickness when a 1 kgf load applied for 3 minutes to a 4.2 g spherical sample at 25°C is read up to 1/100 mm and this value is multiplied by 100) within a range of 50 to 200, and more preferably within a range of 80 to 180 as measured in accordance with the method as prescribed in JIS K6249.

Note that from the perspective of preventing contact failure and the like, these alkenyl group-containing organopolysiloxanes preferably have volatile or low molecular weight siloxane oligomers (octamethyltetrasiloxane (D4), decamethylpentasiloxane (D5) and the like) reduced or eliminated. While the degree can be designed as desired, it may be less than 1% by mass of the total component (A), less than 0.1% by mass for each siloxane oligomer, and may be reduced to the vicinity of the detection limit as required.

Although the amount of alkenyl groups in component (A1) is not particularly limited, from the perspective of the technical effects of the present invention, the amount of the vinyl (CH₂=CH) portion in the alkenyl groups in component (A1) (hereinafter, referred to as the "amount of vinyl") is preferably within a range of 0.005 to 0.400 mass%, and particularly preferably within a range of 0.005 to 0.300 mass%.

Preferably, the mass ratio of the chain organopolysiloxane to organopolysiloxane resin according to the present invention is in a prescribed range, and the use of a prescribed organopolysiloxane resin or mixture thereof makes it possible to simultaneously achieve strong pressure-sensitive adhesive strength in addition to practically sufficient viscoelastic properties and stress of an appropriate storage elastic modulus and tensile stress.

Even component (A) having a lower viscosity than the aforementioned component (A1) is available as component (A) of the present invention. Specifically, an alkenyl group-containing organopolysiloxane (A2) having a viscosity of less than 100,000 mPa·s at 25°C is available. Herein, examples other than the viscosity of component (A2) are the same as component (A1).

From the perspective of the technical effects of the present invention, 50 mass% or more of component (A) is preferably an alkenyl group-containing organopolysiloxane with a high degree of polymerization, which is component (A1), with 75 to 100 mass% thereof particularly preferably component (A1). In other words, when component (A1) (= an alkenyl group-containing organopolysiloxane with a high degree of polymerization) and component (A2) (= an alkenyl group-containing organopolysiloxane with a lower degree of polymerization) are used in combination as component (A) of the present invention, the mass ratios of both range from 50:50 to 100:0, and more preferably 75:25 to 100:0 or 75:25 to 90:10.

### [Other cyclic siloxanes having an alkenyl group and organosilicon compounds]

In the present invention, a small amount of cyclic siloxanes, having an 1 ,3,5,7-tetramethyl-1 ,3,5,7-tetravinylcyclotetrasiloxane or other alkenyl group, may be optionally used together with component (A). These cyclic siloxanes may serve as reactive diluents or curing reactivity control agents and may be used if necessary.

Similarly, organosilicon compounds having more than one alkenyl group on average in a molecule, which do not fall under component (A), component (B), and the cyclic siloxanes having an alkenyl group described above may be optionally used together with component (A). These organosilicon compounds are usually reaction mixtures of alkenyl group-containing silanes and alkenyl group-containing silane-siloxanes used as independent adhesion imparting agents in curable siloxane compositions, and are different components from the polydialkyl siloxanes and other polyorganosiloxane components or organopolysiloxane resin components. These organosilicon compounds have an alkenyl group and in addition to having an epoxy group in a molecule have excellent handling workability, and can impart favorable adhesion to various substrates in addition to rapidly curing by a hydrosilylation curing reaction without loss of viscoelastic properties such as shear storage elastic modulus G' at room temperature or the like. In particular, a pressure-sensitive adhesive layer having excellent tensile adhesive strength may be formed.

The organopolysiloxane resin (B) or mixture thereof is a preferred configuration of the present invention, is a pressure-sensitive adhesion-imparting component that imparts pressure-sensitive adhesive strength to a substrate, and is also a component that achieves the storage elastic modulus, stress, and a practical pressure-sensitive adhesive strength range of a silicone-based pressure-sensitive adhesive layer obtained by curing, when used at a certain ratio with component (A). More specifically, component (B) is an organopolysiloxane resin or a mixture of organopolysiloxanes with a suppressed amount of hydroxyl groups or hydrolyzable groups. Such component (B) is less prone to hydrolysis/polymerization reactions among components (B). Therefore, in the present invention, it is easy to design a silicone-based pressure-sensitive adhesive layer that provides a preferred loss tangent value tanδ (f) in a certain frequency (f) region. Moreover, the use of a resin alone or a combination of resins of different average molecular weights achieves a prescribed storage elastic modulus, stress and practical pressure-sensitive adhesive strength range in the pressure-sensitive adhesive layer serving as a cured product.

In detail, component (B) is an organopolysiloxane resin in which the sum of the amount of hydroxyl groups and hydrolyzable groups relative to the all silicon atoms in a molecule is 9 mol% or less, and may be in the form of a single component or a mixture with a different molecular weight distribution.

As an example, component (B) is an organopolysiloxane resin or mixture thereof containing the following component (b1) and component (b2) at a mass ratio of 0:100 to 100:0. Herein, component (B) may include only component (b1) or component (b2), or may be a mixture of components (b1) and (b2).
(b1) an organopolysiloxane resin, where the total amount of hydroxyl groups and hydrolyzable groups with regard to all silicon atoms in a molecule is 9 mol% or less, and the weight average molecular weight (Mw) measured by calculation based on polystyrene by gel permeation chromatography (GPC) using toluene as a solvent is 4500 or more; and
(b2) an organopolysiloxane resin, where the total amount of hydroxyl groups and hydrolyzable groups with respect to all silicon atoms in a molecule is 9 mol% or less, and the weight average molecular weight (Mw) measured by calculation based on polystyrene by gel permeation chromatography (GPC) is less than 4500.

In component (B) of the present invention, the sum of the amount of hydroxyl groups and hydrolyzable groups in a molecule is within a range of 9 mol% or less with regard to all silicon atoms in the organopolysiloxane resin molecule, and preferably 7 mol% or less with regard to all silicon atoms in the molecule. Note that in component (B), the amount of such hydroxyl groups and hydrolyzable groups can be expressed by converting all of these functional groups into hydroxyl groups. In this case, when the mass% is calculated assuming that all of the hydrolyzable groups other than the hydroxyl groups in the organopolysiloxane resin molecule are hydroxyl groups (OH), the sum of the amount of the aforementioned hydroxyl groups and hydrolyzable groups can be expressed such that the amount of these hydrolyzable groups, which are converted into hydroxyl groups and hydroxyl groups in the organopolysiloxane resin molecule, is 2.0 mass% or less, and preferably 1.6 mass% or less. The hydroxyl groups or hydrolyzable groups are groups which are directly bonded to silicon of the T units, Q units, or the like among the siloxane units in the below-mentioned resin structure, and obtained by hydrolyzing the silane or silane derivative which is a raw material. Consequently, the amount of hydroxyl groups or hydrolyzable groups can be reduced by hydrolyzing the synthesized organopolysiloxane resin with a silylating agent such as trimethylsilane or the like.

In component (B), when the amount of the hydroxyl groups or hydrolyzable groups exceeds the aforementioned upper limit, a condensation reaction between organopolysiloxane resin molecules proceeds, thereby facilitating the formation of an organopolysiloxane resin structure having a large molecular weight in a cured product. Such an organopolysiloxane resin having a high molecular weight tends to impair the curability of the overall composition, the curability of the composition at low temperatures may be insufficient, and the resulting pressure-sensitive adhesive layer may not have sufficient storage elastic modulus for practical use.

Component (B) is both an organopolysiloxane resin and an organopolysiloxanes having a three-dimensional structure. Examples include: resins containing an R₂SiO_{2/2} unit (D unit) and RSiO_{3/2} unit (T unit) (where R mutually independently represents a monovalent organic group) and having an amount of hydroxyl groups or hydrolyzable groups within the aforementioned range; resins containing only a T unit and having an amount of hydroxyl groups or hydrolyzable groups within the aforementioned range; resins containing an R₃SiO_{1/2} unit (M unit) and SiO_{4/2} unit (Q unit) and having an amount of hydroxyl groups or hydrolyzable groups within the aforementioned range; and the like. In particular, a resin (also referred to as MQ resin) is preferably used, which contains an R₃SiO_{1/2} unit (M unit) and SiO_{4/2} unit (Q unit) and where the sum of the amount of hydroxyl groups and hydrolyzable groups with regard to all silicon atoms in a molecule is 0 to 7 mol% (and preferably within a range of 0.0 to 1.6 mass% when all of these functional groups are converted into hydroxyl groups).

The monovalent organic group of R is preferably a monovalent hydrocarbon group with 1 to 10 carbon atoms, with examples thereof including alkyl groups with 1 to 10 carbon atoms, alkenyl groups with 2 to 10 carbon atoms, aryl groups with 6 to 10 carbon atoms, cycloalkyl groups with 6 to 10 carbon atoms, benzyl groups, phenylethyl groups, and phenylpropyl groups. In particular, 90 mol% or more of R is preferably alkyl groups with 1 to 6 carbon atoms or phenyl groups, while 95 to 100 mol% of R is particularly preferably methyl groups or phenyl groups.

When component (B) is a resin containing an R₃SiO_{1/2} unit (M unit) and SiO_{4/2} unit (Q unit), the molar ratio of M units to Q units is preferably from 0.5 to 2.0. This is because when the molar ratio is less than 0.5, the pressure-sensitive adhesive force to the substrate may be reduced, whereas when the molar ratio is greater than 2.0, the cohesive strength of a material configuring a pressure-sensitive adhesive layer decreases. Moreover, D units and T units may also be included in component (B) to an extent that does not impair the properties of the present invention. Furthermore, from the perspective of contact failure prevention and the like, these organopolysiloxane resins may have a low molecular weight siloxane oligomer reduced or eliminated.

Herein, component (B) is an organopolysiloxane resin mixture of component (b1) component (b2) that differ from each other in weight average molecular weight (Mw). Herein, the weight average molecular weight (Mw) is the average molecular weight, taking into consideration the proportion of each molecule in each organopolysiloxane resin measured in terms of standard polystyrene by gel permeation chromatography (GPC) using toluene as mobile phase solvent.

Component (b1) is an organopolysiloxane resin having a large molecular weight, wherein the weight average molecular weight (Mw) thereof is 4500 or more, preferably 5000 or more, and particularly preferably 5500 or more. In practical use, component (b1) is particularly preferably a resin containing the aforementioned R₃SiO_{1/2} unit (M unit) and SiO_{4/2} unit (Q unit), where the weight average molecular weight (Mw) is within a range of 5000 to 10,000.

Component (b2) is an organopolysiloxane resin having a small molecular weight, wherein the weight average molecular weight (Mw) thereof is less than 4500, preferably 4400 or less, and particularly preferably 4200 or less. In practical use, component (b1) is particularly preferably a resin containing the aforementioned R₃SiO_{1/2} unit (M unit) and SiO_{4/2} unit (Q unit), where the weight average molecular weight (Mw) is within a range of 500 to 4200.

Component (B) may be an organopolysiloxane resin or an organopolysiloxane resin mixture containing the component (b1) and (b2) at a mass ratio of 0:100 to 100:0. As described above, only component (b1) or component (b2) may be used, or a mixture thereof may be used. If component (B) is a mixture containing component (b1) and component (b2), the mass ratio thereof is not particularly limited, but the mixing ratio thereof may be within a range of 5:95 to 95:5, within a range of 10:90 to 90:10, or within a range of 15:85 to 85:15, depending on the compositional or viscoelastic design. In contrast, component (B) may be an organopolysiloxane resin containing only component (b1), and similarly, component (B) may be an organopolysiloxane resin containing only component (b2). An embodiment of the present invention in which component (B) is a single organopolysiloxane resin and an embodiment of the present invention in which component (B) is a mixture of component (b1) and (b2) are both included in the preferred embodiments of the present invention. For example, in order to achieve the desired properties such as curability, pressure-sensitive adhesive strength, storage elastic modulus, and the like in the silicone-based pressure-sensitive adhesive layer according to the present invention, a single organopolysiloxane resin may be used, or a substantial combination of two or more organopolysiloxane resins of different molecular weights may be used to achieve the desired, more preferred properties.

### [Mass ratio of component (B) to component (A) and component (A')]

The pressure-sensitive adhesive layer forming organopolysiloxane composition according to the present invention preferably has a mass ratio of component (B), which is an organopolysiloxane resin, with respect to component (A) and component (A') described later, which are chain reactive siloxane components, within a range of 0.8 to 4.0. This is because, when the aforementioned characteristic organopolysiloxane resin or mixture thereof is selected as component (B), and the aforementioned resin component is blended so as to be within the range above with respect to the chain siloxane polymer component, appropriate viscoelastic properties such as loss tangent and the like, which are objects of the present invention, are suitably achieved.

Component (C) is an organohydrogenpolysiloxane having two or more Si-H bonds in a molecule and is a crosslinking agent of the organopolysiloxane composition according to the present invention. The molecular structure of component (C) is not particularly limited, with examples thereof including a straight chain, a partially branched straight chain, a branched chain, a cyclic, or an organopolysiloxane resin structure, and with a straight chain, a partially branched straight chain, or an organopolysiloxane resin structure being preferable. The bonding position of silicon atom-bonded hydrogen atoms is not particularly limited, with examples thereof including molecular chain ends, side chains, and both molecular chain ends and side chains. The amount of the silicon atom-bonded hydrogen atoms is preferably within a range of 0.1 to 2.0 mass%, and more preferably within a range of 0.5 to 1.7 mass%.

Examples of the organic group bonded to a silicon atom include methyl groups and other alkyl groups having 1 to 8 carbon atoms; phenyl groups and other aryl groups; aralkyl groups; and alkyl halide groups. 50 mol% or more of the total number thereof is preferably a phenyl group or alkyl group with 1 to 8 carbon atoms. From the perspective of ease of manufacture and compatibility with the preferred components (A) and (B) described above, the other organic groups are preferably methyl groups or phenyl groups.

Specific examples of component (C) include: tris(dimethylhydrogensiloxy)methylsilane, tetra(dimethylhydrogensiloxy)silane, methylhydrogenpolysiloxanes blocked at both ends with trimethylsiloxy groups, dimethylsiloxane/methylhydrogensiloxane copolymers blocked at both ends with trimethylsiloxy groups, dimethylsiloxane/methylhydrogensiloxane copolymers blocked at both ends with dimethylhydrogensiloxy groups, cyclic methylhydrogen oligosiloxanes, cyclic methylhydrogensiloxane/dimethylsiloxane copolymers, methylhydrogensiloxane/diphenylsiloxane copolymers blocked at both molecular chain ends with trimethylsiloxy groups, methylhydrogensiloxane/diphenylsiloxane/dimethylsiloxane copolymers blocked at both molecular chain ends with trimethylsiloxy groups, hydrolytic condensates of trimethylsilanes, copolymers containing (CH₃)₂HSiO_{1/2} units and SiO_{4/2} units, copolymers containing (CH₃)₂HSiO_{1/2} units, SiO_{4/2} units, and (C6H₅)SiO_{3/2} units, copolymers containing (CH₃)₂HSiO_{1/2} units and CH₃SiO_{3/2} units, and mixtures of two or more types thereof.

### [SiH/Vi ratio]

The composition providing a preferred pressure-sensitive adhesive layer according to the present invention is hydrosilylation reaction curable, and the amount of component (C) used is not particularly limited so long as the composition can be sufficiently cured via a hydrosilylation reaction. However, the substance amount of silicon atom-bonded hydrogen atom (SiH) groups in component (C) with regard to the sum of the amount (substance amount) of alkenyl groups in component (A) and the amount (substance amount) of alkenyl groups in component (B) in the composition, in other words, the molar ratio, is preferably within a range of 0.1 to 100, but may be within a range of 0.5 to 60, within a range of 1.0 to 50, or within a range of 1.0 to 40. Note that the molar ratio hereinafter is referred to as the "SiH/Vi ratio".

In contrast, in order to improve close adhesion to a substrate of glass and the like, the SiH/Vi ratio can be designed so as to be 10 or more or 20 or more, preferably more than 11, and more preferably 22 or more. For example, the substance amount of silicon atom-bonded hydrogen atom (SiH) groups in component (C) with regard to the sum of the amount (substance amount) of alkenyl groups in component (A) and the amount (substance amount) of alkenyl groups in component (B) in the composition can be designed so as to be within a range of 11 to 60, a range of 21 to 60, or a range of 22 to 50. When the amount of the SiH groups falls below the abovementioned lower limit, the technical effect of improving close adhesion to the substrate may not be achieved. In contrast, when the amount of the SiH groups exceeds the abovementioned upper limit, the amount of unreacted residual curing agent becomes large, potentially having adverse effects on curing physical properties such as the brittleness of the cured product or potentially causing problems such as gas generation. However, a practically sufficient pressure-sensitive adhesive layer may be formed even when the SiH/Vi ratio of the composition is outside the aforementioned range.

Note that when cyclic siloxanes having an alkenyl group and organosilicon compounds other than components (A) and component (B) are optionally used, from the perspective of the curability of the composition according to the present invention, the amount of silicon atom-bonded hydrogen atom (SiH) groups in component (C) relative to the total amount (substance amount) of alkenyl groups in the composition including these components is preferably 1.0 or more, and the substance amount of the silicon atom-bonded hydrogen atom (SiH) groups in component (C) may be within a range of 1.5 to 60, or may be within a range of 21 to 60.

### [Hydrosilylation reaction catalyst]

The organopolysiloxane composition according to the present invention contains a hydrosilylation reaction catalyst. Examples of hydrosilylation reaction catalysts include platinum-based catalysts, rhodium-based catalysts, and palladium-based catalysts, with platinum-based catalysts being preferable in that they markedly accelerate the curing of the present composition. The platinum-based catalyst is preferably a platinum-alkenylsiloxane complex, and particularly preferably 1,3-divinyl-1,1,3,3-tetramethyldisiloxane due to the favorable stability of the platinum-alkenylsiloxane complex. Note that as the catalyst for promoting the hydrosilylation reaction, a non-platinum-based metal catalyst such as iron, ruthenium, iron/cobalt, or the like may be used.

While the amount of the hydrosilylation reaction catalyst is not particularly limited in the present invention, the amount of the platinum-based metal in mass units with regard to the total amount of solid fraction in the composition is within a range of 0.1 to 200 ppm, and may be within a range of 0.1 to 150 ppm, within a range of 0.1 to 100 ppm, or within a range of 0.1 to 50 ppm. Herein, the platinum-based metal is a metal element of group VIII including platinum, rhodium, palladium, ruthenium, and iridium. However, in practical use, the amount of the platinum-metal excluding the ligands of the hydrosilylation reaction catalyst is preferably within the range described above. Note that the solid fraction is a component that forms the cured layer (primarily a main agent, an adhesion-imparting component, a crosslinking agent, a catalyst, and other non-volatile components) when the organopolysiloxane composition according to the present invention is subjected to a curing reaction and does not include volatile components such as solvents and the like that volatilize at the time of heat curing.

When the amount of the platinum-based metal in the organopolysiloxane composition according to the present invention is 50 ppm or less (45 ppm or less, 35 ppm or less, 30 ppm or less, 25 ppm or less, or 20 ppm or less) in mass units, discoloration or coloration of the transparent pressure-sensitive adhesive layer may be suppressed, particularly after curing or when heated or exposed to high-energy beams such as UV rays or the like. Meanwhile, from the perspective of the curability of the organopolysiloxane composition, the amount of the platinum-based metal is no lower than 0.1 ppm, because when the amount is lower than this lower limit, this may cause curing defects.

Component (E) is a curing retarder and is compounded in order to suppress crosslinking reactions between the alkenyl groups in the composition and the SiH groups in component (C) so as to extend the usable life at ambient temperatures and enhance the storage stability. Therefore, in practical use, the component is nearly essential to the curable organopolysiloxane composition according to the present invention.

Specific examples of component (E) include acetylenic compounds, ene-yne compounds, organic nitrogen compounds, organic phosphorus compounds, and oxime compounds. Specific examples include: alkyne alcohols such as 3-methyl-1-butyne-3-ol, 3,5-dimethyl-1-hexyne-3-ol, 3-methyl-1-pentyne-3-ol, 1-ethynyl-1-cyclohexanol, phenyl butanol, and the like; ene-yne compounds such as 3-methyl-3-pentene-1-yne, 3,5-dimethyl-1-hexyne-3-yne, and the like; methylalkenylcyclosiloxanes such as 2-ethynyl-4-methyl-2-pentene, 1,3,5,7-tetramethyl-1,3,5,7-tetravinylcyclotetrasiloxane, 1,3,5,7-tetramethyl-1,3,5,7-tetrahexenylcyclotetrasiloxane, and the like, as well as benzotriazoles.

From the perspective of the curing behavior of the composition, the pressure-sensitive adhesive layer forming organopolysiloxane composition according to the present invention is preferably curable at 80 to 200°C, with an increase in viscosity of 1.5-fold after 8 hours at room temperature following the preparation of the composition. The suppression of thickening is important from the perspective of handling workability, pot life, and properties after curing and contains a large excess of component (C), where, even if the amount of the platinum-based metal is optionally low, the curability can be ensured by curing at high temperatures of at least a certain temperature (80 to 200°C). Note that such a composition can be realized by selecting a suitable combination and blending amounts of each of the components described above, the hydrosilylation catalyst, and component (E).

In addition to the preferred components (A) and (B) described above, the preferred organopolysiloxane composition according to the present invention may also contain an organic solvent as a solvent. The type and blending amount of the organic solvent is adjusted taking the coating workability and the like into consideration. Examples of organic solvents include: toluene, xylene, benzene, and other aromatic hydrocarbon-based solvents; heptane, hexane, octane, isoparaffin, and other aliphatic hydrocarbon-based solvents; ethyl acetate, isobutyl acetate, and other ester-based solvents; diisopropyl ether, 1,4-dioxane, and other ether-based solvents; trichloroethylene, perchloroethylene, methylene chloride, and other chlorinated aliphatic hydrocarbon-based solvents; solvent volatile oils; and the like. Two or more types thereof may be combined in accordance with the wettability of the sheet-like substrate or the like. The amount of organic solvent blended is preferably such that the mixture of components (A) to (C) can be uniformly coated on the surface of a sheet-like substrate. For example, the amount is within a range of 5 to 3000 parts by mass per 100 parts by mass of the total of components (A), (B) and (C).

The preferred organopolysiloxane composition according to the present invention may optionally contain components other than the components described above to an extent that does not impair the technical effects of the present invention. Examples can include: adhesion promoters; polydimethylsiloxane, polydimethyldiphenylsiloxane, and other non-reactive organopolysiloxanes; antioxidants; light stabilizers; flame retardants; one or more types of antistatic agents; and the like. Note that in addition to these components, pigments, dyes, inorganic microparticles (reinforcing fillers, dielectric fillers, conductive fillers, thermally conductive fillers), and the like can be optionally blended.

### [(A') Chain organopolysiloxane not containing a carbon-carbon double bond-containing reactive group in a molecule]

The preferred organopolysiloxane composition according to the present invention can blend a non-reactive organopolysiloxane such as a polydimethylsiloxane, polydimethyldiphenylsiloxane, or the like that does not contain a carbon-carbon double bond-containing reactive group such as an alkenyl group, acrylic group, methacrylic group, or the like. As a result, it may be possible to improve the loss coefficient (tan δ), storage elastic modulus (G'), and loss elastic modulus (G") described later of the pressure-sensitive adhesive layer. For example, the loss coefficient of the pressure-sensitive adhesive layer can be increased using a polydimethylsiloxane having a hydroxyl group end and a polydimethylsiloxane or polydimethyldiphenylsiloxane having a trimethylsiloxy end, and such compositions are included within the scope of the present invention.

Herein, component (A') is a chain organopolysiloxane that is not involved in the curing reaction by hydrosilylation, and the mass ratio of component (B) in the composition can affect the properties of the composition, such as the pressure-sensitive adhesive strength, storage elastic modulus, and the like. As described above, the mass ratio of component (B) to components (A) and (A') may be in a range of 0.8 to 4.0. Note that the mass ratio of component (A) to component (A') is not particularly limited, but may be designed to be within a range of 100:0 to 40:60, 100:0 to 65:35, 90:10 to 65:35, 85:15 to 70:30, or the like, depending on the desired storage elastic modulus and the mass ratio to component (B).

The method of preparing the organopolysiloxane composition according to the present invention is not particularly limited and is performed by homogeneously mixing the respective components. A solvent may be added as necessary, and the composition may be prepared by mixing at a temperature of 0 to 200°C using a known stirrer or kneader.

The organopolysiloxane composition of the present invention forms a coating film when applied to a substrate to obtain a cured product by heating under temperature conditions of 80 to 200°C, and preferably under temperature conditions of 90 to 190°C. Examples of application methods include gravure coating, offset coating, offset gravure, roll coating, reverse roll coating, air knife coating, curtain coating, and comma coating. The coating amount can be designed at a desired thickness in accordance with the application such as a display device. For example, the thickness of the pressure-sensitive adhesive layer after curing may be 1 to 1000 µm, 5 to 900 µm, or 10 to 800 µm, but there is no limitation thereto.

### [Method of Use as Pressure-Sensitive Adhesive Layer]

Preferably, in order to improve close adhesion with an adherend, surface treatments such as primer treatment, corona treatment, etching treatment, plasma treatment, and the like may be performed on the surface of the silicone-based pressure-sensitive adhesive layer according to the present invention or a substrate.

The curable organopolysiloxane composition according to the present invention is cured by applying the composition to a release liner, then heating under the temperature conditions described above, and after the release liner is peeled off and the composition is attached to a film-like substrate, a tape-like substrate, or a sheet-like substrate (hereinafter, referred to as a "film-like substrate") or applied to a film-like substrate, curing by heating at the temperature conditions described above so as to form a pressure-sensitive adhesive layer on the surface of the substrate can be performed. In particular, when the cured layer obtained by curing the organopolysiloxane composition is a pressure-sensitive adhesive layer, and particularly a pressure-sensitive adhesive film, the cured layer is preferably treated as a laminated body film that is releasably adhered in a pressure-sensitive manner to a film substrate provided with a release layer having a release-coating capability. The release layer may suitably be a release layer having release-coating capability, such as a silicone-based release agent, a fluorine release agent, an alkyd release agent, a fluorosilicone-based release agent, or the like, or a substrate itself that has physically formed minute irregularities on the surface of the substrate or that is difficult to adhere to the pressure-sensitive adhesive layer of the present invention. The use of a release layer obtained by curing a fluorosilicone-based release agent is preferred. Note that in the aforementioned laminated body, the release layer may be a different release layer, which is a first release layer and a second release layer having different types of release agents and different release forces configuring the release layer. The fluorosilicone-based release agent may be a curing reactive silicone composition containing one or more types of fluorine-containing groups selected from fluoroalkyl groups and perfluoropolyether groups.

### [Manufacturing method and design method of display device]

The display device according to the present invention has a pressure-sensitive adhesive layer between members thereof having the aforementioned features, which are easily ascertained by dynamic viscoelasticity testing of the pressure-sensitive adhesive, and thus can be manufactured by selecting in advance a pressure-sensitive adhesive that satisfies the properties and applying or placing the adhesive between members. Note that the same method can be used to design display devices, and particularly haptic display devices.

In particular, if the composition providing the pressure-sensitive adhesive layer is the pressure-sensitive adhesive layer-forming organopolysiloxane composition described above, which is cured to form a silicone-based pressure-sensitive adhesive layer, an organopolysiloxane composition whose cured product has the above features i) and ii) and is suitably transparent, and that provides a cured product having a glass transition point (Tg) and a specific storage elastic modulus G' at 25°C/-20°C is selected in advance and applied between members, or a pressure-sensitive adhesive layer (e.g. pressure-sensitive adhesive film cured product) obtained by curing the composition is arranged between layers, such that the display device according to the present invention can be manufactured. Note that the display device according to the present invention is preferably a haptic display device or haptic device as described above.

### [EXAMPLES]

Examples of the present invention and comparative examples are described hereinafter. Note that "cured" in each of the examples and comparative examples means that each composition has fully cured under the respective curing conditions.

### (Preparation of Curing Reactive Organopolysiloxane Composition)

The curing reactive organopolysiloxane compositions illustrated in each of the examples and comparative examples were prepared using the components shown in Table 1. Note that all percentages in Table 1 refer to mass%.

### (Measurement of Molecular Weight of Organopolysiloxane Component)

Using a gel permeation chromatography (GPC) Alliance available from Waters and toluene as a solvent, the weight average molecular weight (Mw) and number average molecular weight (Mn) of organopolysiloxane components such as organopolysiloxane resin and the like were determined by calculation based on polystyrene.

### (Measurement of Amount of Hydroxyl Groups (OH) in Organopolysiloxane Resin)

Using an ACP-300²⁹ Si NMR spectrometer available from Bruker provided with a glass-free probe, when the chemical shift of the tetramethylsilane was set to 0 ppm, the molar amount was obtained from the presence ratio of Si(OH)O_{2/3} units appearing at -93 to -103.5 ppm to all silicons, then further converted into the mass% of the hydroxyl groups (OH) in the organopolysiloxane resin. Note that hydrolyzable functional groups other than hydroxyl groups were not included in the organopolysiloxane resin in the following examples.

### (Pressure-Sensitive Adhesive Force Measurement)

Each composition was applied to a PET film (available from Toray Co., Ltd., product name: Lumirror (registered trademark) S10, thickness: 50 µm) such that the thickness after curing was 50 µm, after which it was cured for 3 minutes at 150°C. After being left to stand for one day, the sample was cut to a width of 20 mm and the pressure-sensitive adhesive layer surface was adhered to a PMMA plate (manufactured by Paltec, ACRYLITE L001, 50x120x2 mm) using a roller to form a test piece. With respect to the test piece using the PMMA plate, the pressure-sensitive adhesive force (measurement at a width of 20 mm converted to the display unit gf/inch) was measured at a tensile rate of 300 mm/min using a 180° peeling test method in accordance with JIS Z 0237, using an RTC-1210 tensile tester available from Orientec Co., Ltd. The results are shown in Table 2.

### (Dynamic Viscoelasticity)

Each composition was applied to a release liner coated via fluorosilicone release coating such that the thickness after curing was approximately 100 µm, then cured at 150°C for five minutes. Alternatively, each composition was applied to a release liner coated via fluorosilicone release coating such that the thickness after curing was approximately 280 µm, then cured at 150°C for 15 minutes. Five or more of the pressure-sensitive adhesive films for 100 µm and two for 280 µm were overlaid to obtain a film sample with a thickness of at least 500 µm, with both surfaces sandwiched by a release liner. The film was cut to a diameter of 8 mm and adhered to the parallel plate probe of a dynamic viscoelastic device (DMA; MCR302 available from Anoton Paar) and then was measured. For measurements, the temperature was increased to 125°C and the frequency dependence of the storage elastic modulus G', loss elastic modulus G", loss tangent (tan δ) was measured at several temperatures down to -45°C, under isothermal conditions, in shear mode at 0.1% strain at 0.1-10 Hz, with a stepwise decrease in temperature to obtain a master curve by the time-temperature conversion law. These temperature dependencies were then measured in a range of -70°C to 200°C at a frequency of 1 Hz and a temperature increase rate of 3°C/min. The values of loss tangent (tanδ) at frequencies of 100, 200, and 300 Hz at 25°C obtained from the master curves are shown in Table 2.

Materials of the curing reactive organopolysiloxane compositions are shown in Table 1. Note that the viscosity or plasticity of each component was measured at room temperature using the following methods.

### [Viscosity]

The viscosity (mPa·s) is a value measured using a rotational viscometer conforming to JIS K7117-1, while the kinematic viscosity (mm²/s) is a value measured with an Ubbelohde viscometer conforming to JIS Z8803.

### [Plasticity]

The plasticity was expressed as a value measured in accordance with the method prescribed in JIS K 6249 (thickness when a 1 kgf load was applied for 3 minutes to a 4.2 g spherical sample at 25°C was read up to 1/100 mm, and this value was multiplied by 100).

### [Light transmittance and transparency]

The curing reactive organopolysiloxane compositions shown in each example and comparative example were coated such that the thickness after curing was 100 µm, and then cured at 150°C for 3 minutes. The light transmittance was then measured. Visual confirmations were made that the cured products in the examples and comparative examples all had favorable transparency, and the light transmittance thereof was 95% or higher when air was taken as 100%.

**[Table 1]**

| Table 1: Components of the curing reactive organopolysiloxane compositions | |
|---|---|
| Component Name | Component |
| Component a-1 | Vinyl functional polydimethylsiloxane, rubber-like state (plasticity 152), amount of vinyl groups 0.013 mass% |
| Component a-2 | Vinyl functional polydimethylsiloxane, rubber-like state (plasticity 134), vinyl content 0.018 mass% |
| Component a-3 | Vinyl-functional polydimethylsiloxane, rubber-like (plasticity: 150), vinyl content: 0.067 mass% |
| Component a' | Vinyl functional polydimethylsiloxane, rubber-like state (plasticity 170), |
| Component b-1 | MQ silicone resin containing (CH₃)₃SiO_{1/2} units, SiO_{4/2} units, and hydroxyl groups, Mw: 6970, OH content: 4.5 mol% (1.0 mass%), xylene solution (solid fraction: 64.0%) |
| Component b-2 | MQ silicone resin containing (CH₃)₃SiO_{1/2} units, SiO_{4/2} units, and hydroxyl groups, Mw: 4070, OH content: 3.5 mol% (0.8 mass%), xylene solution (solid fraction: 69.9%) |
| Component b-3 | MQ silicone resin containing (CH₃)₃SiO_{1/2} units, SiO_{4/2} units, and hydroxyl groups, Mw: 3760, OH content: 3.5 mol% (0.8 mass%), xylene solution (solid fraction: 72.5%) |
| Component c-1 | Dimethylsiloxane-methylhydrogensiloxane copolymer capped with trimethylsiloxy groups at both terminals of a molecular chain, Mw: 1600, SiH content: 0.73% |
| Component c-2 | Methylhydrogenpolysiloxane capped at both terminals of the molecular chain with trimethylsiloxy groups, viscosity: 20 mm²/s, SiH content: 1.59% |
| Component d-1 | Platinum-based hydrosilylation reaction catalyst containing 0.62 mass% of platinum |
| Component d-2 | Platinum-based hydrosilylation reaction catalyst containing 0.52 mass% of platinum |
| Component e-1 | 20 mass% toluene solution of 1-ethynyl-1-cyclohexanol |
| Component e-2 | 2-Ethynyl-4-methyl -2-pentene |

### [Examples 1 to 7, Comparative Examples 1 to 4]

Compositions according to Examples 1 to 7 and Comparative Examples 1 to 4 were prepared and cured in accordance with the items above (dynamic viscoelasticity) and (pressure-sensitive adhesive strength measurement), and the pressure-sensitive adhesive strength and loss tangents (tanδ) at frequencies of 100, 200, and 300 Hz at 25°C are shown in Table 2.

### (Example 1)

33.3 parts by mass of component a-1, 8.33 parts by mass of component a', 80.5 parts by mass of component b-3, 44.5 parts by mass of toluene, 0.692 parts by mass of component c-1, and 0.409 parts by mass of component e-1 were mixed at room temperature, and 0.484 parts by mass of component d-1 were added to the mixture to obtain a curing reactive organopolysiloxane composition. The molar ratio of SiH groups in component c-1 to alkenyl groups in component a-1 (SiH/Vi ratio) was 31.5 and the amount of platinum metal in the solid fraction was 30 ppm in mass units.

### (Example 2)

38.5 parts by mass of component a-1, 84.9 parts by mass of component b-3, 43.3 parts by mass of toluene, 0.762 parts by mass of component c-1, and 0.577 parts by mass of component e-1 were mixed at room temperature, and 0.423 parts by mass of component d-2 were added to the mixture to obtain a curing reactive organopolysiloxane composition. The molar ratio of SiH groups in component c-1 to alkenyl groups in component a-1 (SiH/Vi ratio) was 30.1 and the amount of platinum metal in the solid fraction was 22 ppm in mass units.

### (Example 3)

29.9 parts by mass of component a-1, 7.46 parts by mass of component a', 86.5 parts by mass of component b-3, 42.9 parts by mass of toluene, 0.586 parts by mass of component c-1, and 0.409 parts by mass of component e-1 were mixed at room temperature, and 0.355 parts by mass of component d-1 were added to the mixture to obtain a curing reactive organopolysiloxane composition. The molar ratio of SiH groups in component c-1 to alkenyl groups in component a-1 (SiH/Vi ratio) was 29.8 and the amount of platinum metal in the solid fraction was 22 ppm in mass units.

### (Example 4)

18.6 parts by mass of component a-1, 18.6 parts by mass of component a', 86.7 parts by mass of component b-3, 42.8 parts by mass of toluene, 0.423 parts by mass of component c-1, and 0.409 parts by mass of component e-1 were mixed at room temperature, and 0.355 parts by mass of component d-1 were added to the mixture to obtain a curing reactive organopolysiloxane composition. The molar ratio of SiH groups in component c-1 to alkenyl groups in component a-1 (SiH/Vi ratio) was 34.5 and the amount of platinum metal in the solid fraction was 22 ppm in mass units.

### (Example 5)

34.6 parts by mass of component a-1, 90.2 parts by mass of component b-3, 41.9 parts by mass of toluene, 0.655 parts by mass of component c-1, and 0.577 parts by mass of component e-1 were mixed at room temperature, and 0.355 parts by mass of component d-1 were added to the mixture to obtain a curing reactive organopolysiloxane composition. The molar ratio of SiH groups in component c-1 to alkenyl groups in component a-1 (SiH/Vi ratio) was 28.7 and the amount of platinum metal in the solid fraction was 22 ppm in mass units.

### (Example 6)

23.2 parts by mass of component a-1, 9.93 parts by mass of component a', 92.3 parts by mass of component b-3, 41.3 parts by mass of toluene, 0.489 parts by mass of component c-1, and 0.409 parts by mass of component e-1 were mixed at room temperature, and 0.355 parts by mass of component d-1 were added to the mixture to obtain a curing reactive organopolysiloxane composition. The molar ratio of SiH groups in component c-1 to alkenyl groups in component a-1 (SiH/Vi ratio) was 32.1 and the amount of platinum metal in the solid fraction was 22 ppm in mass units.

### (Example 7)

30.7 parts by mass of component a-1, 15.1 parts by mass of component b-1, 82.2 parts by mass of component b-3, 38.7 parts by mass of toluene, 0.598 parts by mass of component c-1, and 0.577 parts by mass of component e-1 were mixed at room temperature, and 0.355 parts by mass of component d-1 were added to the mixture to obtain a curing reactive organopolysiloxane composition. The molar ratio of SiH groups in component c-1 to alkenyl groups in component a-1 (SiH/Vi ratio) was 29.6 and the amount of platinum metal in the solid fraction was 22 ppm in mass units.

### (Comparative Example 1)

49.0 parts by mass of component a-1, 72.9 parts by mass of component b-2, 44.7 parts by mass of toluene, 1.00 part by mass of component c-1, and 0.600 parts by mass of component e-1 were mixed at room temperature, and 0.577 parts by mass of component d-2 were added to the mixture to obtain a curing reactive organopolysiloxane composition. The molar ratio of SiH groups in component c-1 to alkenyl groups in component a-1 (SiH/Vi ratio) was 31.0 and the amount of platinum metal in the solid fraction was 30 ppm in mass units.

### (Comparative Example 2)

45.5 parts by mass of component a-1, 78.0 parts by mass of component b-2, 43.2 parts by mass of toluene, 0.923 parts by mass of component c-1, and 0.545 parts by mass of component e-1 were mixed at room temperature, and 0.545 parts by mass of component d-2 were added to the mixture to obtain a curing reactive organopolysiloxane composition. The molar ratio of SiH groups in component c-1 to alkenyl groups in component a-1 (SiH/Vi ratio) was 31.0 and the amount of platinum metal in the solid fraction was 28.3 ppm in mass units.

### (Comparative Example 3)

36.2 parts by mass of component a-2, 99.6 parts by mass of component b-1, 30.8 parts by mass of toluene, 0.332 parts by mass of component c-2, and 0.332 parts by mass of component e-2 were mixed at room temperature, and 0.602 parts by mass of component d-1 were added to the mixture to obtain a curing reactive organopolysiloxane composition. The molar ratio of SiH groups in component c-2 to alkenyl groups in component a-2 (SiH/Vi ratio) was 23.0 and the amount of platinum metal in the solid fraction was 40 ppm in mass units.

### (Comparative Example 4)

32.3 parts by mass of component a-3, 101 parts by mass of component b-1, 4.01 parts by mass of component b-3, 29.4 parts by mass of toluene, 0.761 parts by mass of component c-2, and 0.491 parts by mass of component e-1 were mixed at room temperature, and 0.355 parts by mass of component d-1 were added to the mixture to obtain a curing reactive organopolysiloxane composition. The molar ratio of SiH groups in component c-2 to alkenyl groups in component a-3 (SiH/Vi ratio) was 12.8 and the amount of platinum metal in the solid fraction was 22 ppm in mass units.

**[Table 2]**

| | 25°C, loss tangent (tan δ) value | | | Adhesive strength to PMMA (gf/inch) |
|---|---|---|---|---|
| | 100 Hz | 200 Hz | 300 Hz | |
| Example 1 | 0.854 | 1.113 | 1.242 | 700 |
| Example 2 | 1.407 | 1.614 | 1.728 | 1150 |
| Example 3 | 1.678 | 1.823 | 1.878 | 1360 |
| Example 4 | 1.990 | 1.914 | 1.894 | 1410 |
| Example 5 | 1.876 | 1.684 | 1.562 | 1870 |
| Example 6 | 1.978 | 1.728 | 1.605 | 2220 |
| Example 7 | 0.969 | 0.851 | 0.780 | 2720 |
| Comparative Example 1 | 0.308 | 0.413 | 0.478 | 580 |
| Comparative Example 2 | 0.520 | 0.675 | 0.797 | 810 |
| Comparative Example 3 | 0.393 | 0.359 | 0.340 | 2250 |
| Comparative Example 4 | 0.261 | 0.238 | 0.228 | 2150 |

As shown in Table 2, for the pressure-sensitive adhesive layer forming organopolysiloxane compositions according to Examples 1 to 7, a master curve is created using the time-temperature conversion law from the dynamic viscoelasticity measurement results for the pressure-sensitive adhesive layer with excellent transparency obtained by the curing, the loss tangent (tanδ) value at 25°C obtained therefrom has a maximum value exceeding 0.9 between frequencies of 100 and 300 Hz, and the pressure-sensitive adhesive strength to PMMA is high at 500 gf/inch or more. By arranging such cured pressure-sensitive adhesive film between members of a display device, a display with suitable performance can be expected to be designed. In particular, display devices having these pressure-sensitive adhesive layers between members are expected to have excellent reliability and durability due to having pressure-sensitive adhesive layers with sufficient adhesive strength between members, and in particular, improvement of the haptic function thereof is strongly expected.

In contrast, in Comparative Examples 1 to 4, the loss tangent does not reach 0.9 over the entire frequency region between 100 and 300 Hz. The pressure-sensitive adhesive layer obtained by curing the compositions according to the comparative examples has a low loss tangent value. Therefore, there is a particularly strong concern that optimal performance cannot be achieved in display devices that require this haptic function.

### [INDUSTRIAL APPLICABILITY]

The display device of the present invention has a pressure-sensitive adhesive layer that combines specific viscoelastic properties and pressure-sensitive adhesive strength between members, and thus is suitable as a haptic-integrated touch screen with a structure obtained by laminating a display panel, a haptic-integrated touch screen, and a protective cover made of a transparent member such as glass or the like.

## Claims

1. A display device, comprising: a pressure-sensitive adhesive layer having the following features i) and ii) between members.
Feature i): The maximum value of the loss tangent tanδ (f) at 25°C and frequency f (Hz) of 100 to 300 Hz is 0.9 or more.
Feature ii): When the thickness of the pressure-sensitive adhesive layer is 50 µm, the pressure-sensitive adhesive strength is 500 gf/inch or more as measured at a tensile rate of 300 mm/min using a 180° peel test method in accordance with JIS Z 0237 with respect to a 2 mm thick polymethyl methacrylate sheet.

2. The display device according to claim 1, wherein with respect to feature i) above, the loss tangent tanδ (f) is 0.9 or more in at least one continuous frequency region at 25°C and a frequency f (Hz) of 100 to 300 Hz.

3. The display device according to claim 1, wherein with respect to feature i) above, the maximum value of the loss tangent tanδ (f) at 25°C and a frequency f (Hz) of 100 to 300 Hz is 0.9 or more, and the loss tangent tanδ (f) within the frequency range above is 0.70 or less.

4. The display device according to claim 1, wherein with respect to feature i), the maximum value of the loss tangent tanδ (f) at 25°C and frequency f (Hz) of 100 to 300 Hz is 1.0 or more, and
with respect to feature ii), the pressure-sensitive adhesive strength is within a range of 600 to 4000 gf/inch

5. The display device according to claim 1, wherein the pressure-sensitive adhesive layer is formed by a cured product of a pressure-sensitive adhesive layer-forming organopolysiloxane composition containing:
(A) a chain organopolysiloxane having alkenyl groups in numbers greater than 1 on average in a molecule;
(B) an organopolysiloxane resin in which the sum of the amount of hydroxyl groups and hydrolyzable groups relative to all silicon atoms in a molecule is 9 mol% or less;
(C) an organohydrogenpolysiloxane having at least two Si-H bonds in a molecule; and
(D) an effective amount of a hydrosilylation reaction catalyst.

6. The display device according to claim 5, wherein at least a portion of component (A) is a raw rubber-like alkenyl group-containing organopolysiloxane having a viscosity of 100,000 mPa s or more at 25°C or having a plasticity within a range of 50 to 200 as measured in accordance with a method as specified in JIS K6249, and is a chain organopolysiloxane where the amount of a vinyl (CH₂=CH) moiety of the alkenyl group is within a range of 0.005 to 0.400 mass%,
component (B) is an organopolysiloxane resin or a mixture thereof essentially containing a R₃SiO_{1/2} unit (where R represents a monovalent organic group and 90 mol% or more of R is an alkyl group or phenyl group with 1 to 6 carbon atoms; M unit) and SiO_{4/2} (Q unit),
the amount of component (C) is an amount such that the ratio (molar ratio) of the amount of SiH groups in component (c) to the total substance amount of the alkenyl groups in components (A) and (B) is within a range of 0.1 to 100, and
the amount of component (D) is such that the amount of platinum-based metals in a solid fraction of the composition is within a range of 0.1 to 200 ppm.

7. The display device according to claim 1, wherein the pressure-sensitive adhesive layer further has the following feature iii).
Feature iii): The transmittance of light at a wavelength of 450 nm in the pressure-sensitive adhesive layer with a thickness of 100 µm is 80% or more when the light transmittance of air is 100%.

8. The display device according to any one of claims 1 to 7, which is a display device with a touch panel.

9. The display device according to any one of claims 1 to 7, which is a display device with a haptic function.

10. The display device according to any one of claims 1 to 7, which is a haptic display device having a function for recognizing contact with a display surface and a haptic function for providing a haptic feedback or notification for the contact.

11. A design method for a display device, comprising a step of arranging a pressure-sensitive adhesive layer having the following features i) and ii) between members forming a display device to achieve or improve a haptic function of the device.
Feature i): The maximum value of the loss tangent tanδ (f) at 25°C and frequency f (Hz) of 100 to 300 Hz is 0.9 or more.
Feature ii): When the thickness of the pressure-sensitive adhesive layer is 50 µm, the pressure-sensitive adhesive strength is 500 gf/inch or more as measured at a tensile rate of 300 mm/min using a 180° peel test method in accordance with JIS Z 0237 with respect to a 2 mm thick polymethyl methacrylate sheet.
